# FASCICULE DE BREVET EUROPEEN

(11) **EP 3 697 998 B1**
(45) Date de publication et mention de la délivrance du brevet: **27.10.2021**
(21) Numéro de dépôt: 18773780.4
(22) Date de dépôt: 27.09.2018
(51) Int. Cl.: E05F 1/12, E05D 5/06

(54) **DISPOSITIF DE BASCULEMENT AUTOMATIQUE D'UN OUVRANT**
VORRICHTUNG ZUM AUTOMATISCHEN KIPPEN EINES ÖFFNUNGSBLATTES
DEVICE FOR AUTOMATICALLY TILTING AN OPENING LEAF

(30) Priorité: 17.10.2017 FR 1759726
(43) Date de publication de la demande: 26.08.2020
(73) Titulaire: Renault S.A.S., 92100 Boulogne-Billancourt (FR)
(72) Inventeur: BARBOI, Florin, Campulung Arges (RO); BOICEA, Niculae, Jud Arges (RO)
(86) Numéro de dépôt international: PCT/EP2018/076343
(87) Numéro de publication internationale: WO 2019/076607

(56) Documents cités:
- DE-A1- 10 134 592
- US-A- 4 776 626

## Description

La présente invention est du domaine des véhicules automobiles et plus particulièrement de leur dispositif de basculement d'un ouvrant sur une structure de caisse.

L'invention concerne un dispositif de basculement d'un ouvrant sur une structure de caisse d'un véhicule délimitant une voie d'accès à un compartiment, notamment un compartiment à bagages, le dispositif de basculement comprenant un moyen d'articulation sur lequel l'ouvrant est monté mobile entre des positions d'obturation et d'ouverture maximale de la voie d'accès au compartiment.

Il est connu des véhicules dont la structure de caisse délimite un compartiment à bagages ainsi qu'une voie d'accès à ce dernier. Un ouvrant est bien souvent monté de manière mobile, sensiblement à rotation, entre une position d'obturation de la voie d'accès à une position d'ouverture maximale. Dans sa position d'obturation, l'ouvrant ferme la voie d'accès de sorte que le compartiment à bagages est isolé du l'extérieur. Dans sa position d'ouverture de l'ouvrant, il devient alors possible d'accéder au compartiment à bagages afin d'en assurer le chargement ou le déchargement d'objets.

L'ouvrant est une pièce de carrosserie, bien souvent réalisée en acier, en matière plastique, ou plus récemment en matériau composite. Compte tenu de son poids, sa manœuvre est rendue possible par des moyens d'assistance. A titre d'exemple, lesdits moyens d'assistance consiste en l'application d'un effort de poussée de l'ouvrant vers ses positions d'ouverture et de fermeture par des éléments à ressort par exemple, et en un contrôle de la vitesse et de la force d'ouverture par l'utilisation d'équilibreurs, comme cela est décrit dans le document US4776626-A.

La position évolutive ainsi que l'état changeant dudit moyen d'assistance engendre un couple d'assistance variable selon la position angulaire d'ouverture de l'ouvrant. Cette évolution d'assistance est recherchée afin de créer le compromis idéal à la manoeuvre de l'ouvrant, tant dans sa phase d'ouverture que dans sa phase de fermeture. Ainsi, avec un couple insuffisant pour exercer la levée de l'ouvrant, ledit moyen d'assistance accompagne l'ouvrant dont le poids provoque sa fermeture depuis une position intermédiaire prédéterminée. Au-delà de cette position intermédiaire prédéterminée d'ouverture, pouvant également être qualifiée de position de point neutre, le couple d'assistance est suffisant, tout du moins supérieure au moment de l'ouvrant, pour que ce dernier bascule de sa position intermédiaire prédéterminée d'ouverture vers sa position d'ouverture maximale par l'action du dispositif de basculement.

Le problème d'un tel moyen d'assistance est qu'il requiert l'intervention de l'utilisateur pour engager le basculement de l'ouvrant.

C'est ainsi que le besoin d'assistance à l'ouverture a progressivement évolué de sorte qu'aujourd'hui, les moyens d'assistance sont couplés à, voire parfois remplacés par des systèmes d'ouverture automatique qui peuvent reprendre en tout ou partie les éléments d'assistance connus auxquels sont adjoints ou bien être intégralement remplacés par des actionneurs de type motoréducteur ou vérin électrique.

De tels systèmes d'ouverture automatique sont complexes dans leur mise en œuvre en faisant appel à des moyens de supervision du fonctionnement requérant de nombreux capteurs afin de rendre le pilotage sécuritaire. De tels systèmes d'ouverture automatique doivent en outre être intégrés dans l'environnement contraint par une structure arrière de caisse afin d'y être dissimulés. De par leur encombrement, ils peuvent dégrader l'accès au compartiment à bagages. En outre, il a été relevé que leur fonctionnement nécessite une source d'énergie additionnelle, bien souvent de nature électrique.

Compte tenu que le degré de technologie déployé pour de tels systèmes d'automatisation, ces derniers sont couteux de sorte qu'ils sont préférentiellement destinés à certaines gammes de véhicules, sans pouvoir être généralisés à des véhicules de gamme inférieure.

C'est dans cet environnement que le dispositif de basculement d'un ouvrant est issu. Le dispositif objet de l'invention vise à solutionner les problèmes d'encombrement et de cout susmentionnés.

Le but de l'invention est de fournir un dispositif de basculement d'un ouvrant sur une structure de caisse d'un véhicule délimitant une voie d'accès à un compartiment, notamment un compartiment à bagages, selon la revendication 1, le dispositif de basculement comprenant un moyen d'articulation sur lequel l'ouvrant est monté mobile entre des positions d'obturation et d'ouverture maximale de la voie d'accès au compartiment par un bras de liaison sensiblement de profil en col de cygne, l'une des extrémités du bras coopère avec ledit moyen d'articulation. Le dispositif de basculement d'un ouvrant comprend un moyen d'assistance à l'ouverture comportant au moins des première et seconde lois d'effort appliquées de manière successive à l'ouvrant selon sa position angulaire d'ouverture par rapport à la structure de caisse. La première loi d'effort est appliquée à l'ouvrant sur une première plage angulaire d'ouverture entre la position de fermeture et une position intermédiaire prédéfinie d'ouverture, la deuxième loi d'effort étant appliquée à l'ouvrant sur une seconde plage angulaire d'ouverture entre sa position intermédiaire prédéfinie d'ouverture et sa position d'ouverture maximale. Les première et seconde lois d'effort sont réalisées selon des configurations différentes d'un ressort de traction.

De manière avantageuse, la première loi d'effort consiste en un travail en traction du ressort sur un nombre réduit de ses spires, l'ouvrant comportant un premier doigt d'accroche qui s'étend en saillie hors d'un bord latéral extérieur du bras et qui est destiné à venir en prise avec l'une des spires du ressort de sorte qu'entre la position de fermeture et la position intermédiaire prédéfinie d'ouverture de l'ouvrant, l'effort de traction du ressort est augmenté

Grâce à l'invention, l'ouvrant bascule sous l'influence de deux lois d'effort de sorte qu'il est possible de gérer deux phases successives et distinctes de basculement entre sa position de fermeture et sa position d'ouverture maximale. La première loi est dédiée à la phase initiale d'ouverture qui débute lorsque l'ouvrant est déverrouillé de la structure de caisse et qu'il bascule vers une position intermédiaire prédéfinie d'ouverture, dite aussi position neutre. La seconde loi débute lorsque lesdits moyens d'assistance fournissent un couple de basculement qui permette de pousser l'ouvrant au-delà d'une position intermédiaire prédéterminée et vers sa position d'ouverture maximale.

Le dispositif de basculement selon l'invention peut en outre comprendre les caractéristiques suivantes, prises séparément ou en combinaison entre elles :
- le ressort comprend un corps déformable en spires hélicoïdales dont l'une des spires est destinée à venir en prise avec le premier doigt d'accroche lorsque l'ouvrant est entre ses positions de fermeture et d'ouverture intermédiaire prédéfinie, la spire destinée à venir en appui contre le premier doigt d'accroche afin de transmettre la première loi d'effort à l'ouvrant est approximativement située à une distance de l'extrémité du corps déformable comprise entre un tiers et un quart de sa longueur totale ;
- le ressort comprend à chacune de ces extrémités, un crochet de fixation, l'un étant lié à un point fixe sur caisse, l'autre à un point mobile lié à l'ouvrant articulé, la seconde loi d'effort consistant en un travail en traction du ressort utilisant la totalité des spires du ressort entre la position intermédiaire prédéfinie d'ouverture et la position d'ouverture maximale de l'ouvrant ;
- le ressort de traction est lié par l'un des crochets de fixation à un dispositif de réglage de la tension du ressort qui est disposé sur la structure de caisse de sorte à former un point fixe parmi plusieurs, l'autre des crochets de fixation est monté sur un second doigt d'accroche courbé afin de maintenir continuellement la liaison entre le ressort et l'ouvrant quelle que soit la position angulaire de l'ouvrant entre ses positions de fermeture et d'ouverture totale, le second doigt d'accroche étant rapporté sur un bras de liaison liant l'ouvrant audit moyen d'articulation.

L'invention a aussi trait à un véhicule notamment du type d'une automobile selon la revendication 5, comportant une structure de caisse délimitant une ouverture d'accès à un compartiment, par exemple un compartiment à bagages, lequel véhicule comprend un dispositif de basculement conforme à l'une quelconque des caractéristiques susmentionnées.

L'invention concerne aussi un procédé d'ouverture d'un ouvrant relié à une structure de caisse d'un véhicule par l'intermédiaire d'un dispositif de basculement susmentionné, selon la revendication 6, l'ouvrant étant en position de fermeture, le premier doigt d'accroche étant en prise avec une spire du ressort, un moyen de verrouillage maintient l'ouvrant en position de fermeture sur la structure de caisse, le procédé comporte les étapes suivantes :
- le moyen de verrouillage est basculé en l'état inactif de maintien de l'ouvrant en position de fermeture,
- l'ouvrant est sous la dépendance de la première loi d'effort de sorte que l'ouvrant bascule de sa position de fermeture vers sa position intermédiaire prédéfinie d'ouverture, le premier doigt d'accroche reste en prise avec la spire du ressort, puis
- le premier doigt d'accroche se libère de la spire du ressort de telle sorte que l'ouvrant est alors sous la dépendance de la seconde loi d'effort, l'ouvrant basculant jusqu'à sa position d'ouverture totale.

Le procédé peut aussi se caractérisé par le fait que l'ouvrant assujetti aux première et seconde lois d'efforts est sous la dépendance d'un couple de basculement supérieur au moment d'inertie de l'ouvrant, rendant apte l'ouverture automatique de l'ouvrant.

Ces objets, caractéristiques et avantages de la présente invention seront exposés en détails dans la description suivante d'un mode de réalisation particulier d'un dispositif de basculement selon l'invention faite à titre non-limitatif en relation avec les figures jointes parmi lesquelles :
- la figure 1 est une vue schématique en perspective et de trois quart arrière représentant en partie un dispositif de basculement d'un ouvrant, selon l'invention,
- la figure 2 est une vue schématique en perspective de trois quart avant représentant le dispositif de basculement d'un ouvrant, selon l'invention,
- la figure 3 illustre une première courbe représentative du couple nécessaire au déplacement de l'ouvrant, et une seconde courbe représentative du couple fournit par le dispositif de basculement de l'invention.

Sur l'ensemble des figures, l'axe transversal Y s'étend de la droite vers la gauche du véhicule, l'axe vertical Z s'étend du bas vers le haut, l'axe longitudinal X étant donné selon un sens normal de déplacement du véhicule et de l'avant vers l'arrière. Les termes « haut » et « bas » ou « supérieur » et « inférieur » se rapportent à une orientation d'axe vertical Z. Pour ne pas alourdir les figures, les références numériques ne sont pas reproduites sur toutes les figures illustrant l'agencement selon l'invention.

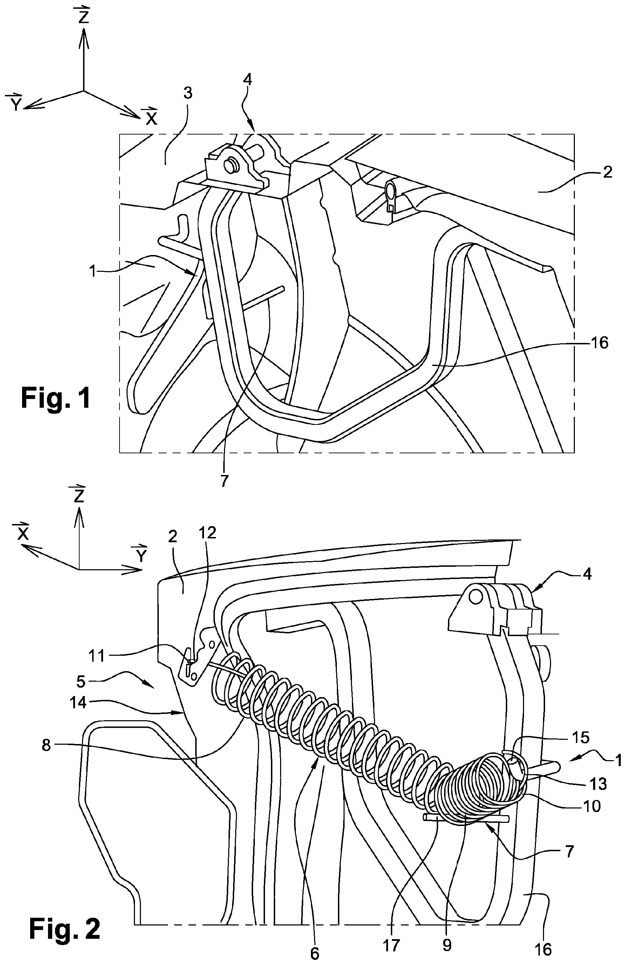

La figure 1 représente un ouvrant 2 relié à la structure 3 de caisse d'un véhicule par un moyen d'articulation 4. Ce dernier est du type d'une charnière permettant à l'ouvrant de pivoter autour d'un axe Y. La structure 3 de caisse est une tablette arrière au-dessus de laquelle est rapportée fixement la charnière, notamment par vissage. L'ouvrant 2 comprend à proximité de ses bords latéraux des bras 16 d'articulation sensiblement de profil en col de cygne. L'une des extrémités du bras, située à l'avant, coopère avec ledit moyen d'articulation 4. Pour ce faire, une ouverture est pratiquée au travers de la tablette, au droit de la charnière. L'ouverture est destinée à être traversé par le bras 16 d'articulation. L'autre des extrémités du bras 16 est rapporté fixement à l'ouvrant 2, par exemple par vissage.

Outre ledit moyen d'articulation 4, le dispositif 1 de basculement comprend les bras 16 d'articulation sur lequel sont montés des premier et second doigts d'accroche 9, 15 conformés pour venir en prise avec un ressort 6.

Le bras 16 peut être tubulaire et sensiblement de section carrée. Une platine comprenant en saillie le second doigt d'accroche 15 est monté sur le bras 16, préférentiellement par vissage. En saillie hors de cette platine, s'étend le second doigt d'accrochage 15 qui est de forme complexe, tout du moins présentant plusieurs rayons de courbure dont un est destiné à maintenir le ressort 6 par l'un de ses crochets 10 de fixation quelle que soit la position angulaire d'ouverture de l'ouvrant 2, donc du bras 16 autour de la charnière. Le crochet de fixation 10 est ainsi rapporté sur un point mobile 13 lié à l'ouvrant articulé.

Le ressort 6 comprend un crochet 11 de fixation au niveau de l'autre des extrémités de la spire hélicoïdale 8. Le crochet 11 de fixation est lié à un point fixe 12 sur caisse. Préférentiellement, un dispositif de réglage 14 de la tension du ressort 6 est rendu solidaire de la structure de caisse de telle sorte que le dispositif de basculement 1 comprend un moyen de réglage de la tension du ressort, lequel consiste en un placement du crochet de fixation 11 dans l'un parmi plusieurs des points fixes 12. A titre d'exemple, le dispositif de réglage 14 comprend une platine soudée sur caisse, la platine comportant un chemin linéaire sur lequel sont disposés deux points fixes 12 qui sont destinés à recevoir le crochet 11 de fixation dans l'une ou l'autre des configurations de traction.

Préférentiellement les crochets 10 et 11 de fixation situés respectivement aux deux extrémités de la spire hélicoïdale 8 sont en demi-arc de cercle.

La figure 1 représente le dispositif de basculement 1 de l'invention sans le ressort 6. Cela permet de mettre en évidence d'autres éléments essentiellement, notamment le premier doigt d'accroche 7. Ce dernier s'étend en saillie hors d'un bord latéral extérieur du bras 16. Le premier doigt d'accroche 7 a une longueur prédéterminée pour venir en prise avec le ressort 6, plus particulièrement avec une spire 9 spécifique. A titre d'exemple, le premier doigt d'accroche 7 comprend une partie fonctionnelle destinée à venir en prise avec le ressort 6 et une partie de préhension pour en permettre sa fixation au bras par vissage. Pour ce faire, la partie de préhension est conçue de manière complémentaire à un outil de serrage telle une clé plate de serrage, tout en étant prolongée axialement par une tige filetée rendant apte son vissage sur le bras d'articulation 16.

Le premier doigt d'accroche 7 est rectiligne et orienté parallèlement à l'axe Y du véhicule. Comme cela sera détaillé par la suite plus en détails, le premier doigt d'accroche 7 est apte à croiser le chemin du ressort entre les positions de fermeture et intermédiaire d'ouverture, de telle sorte que seule une partie de la spire hélicoïdale 8 travaille en traction pour fournir un effort d'ouverture à l'ouvrant. Le contact entre la spire 9 et le premier doigt d'accroche 7 définit un point mobile 17 de traction du ressort. Afin de protéger la spire 9 du ressort contre toute usure prématurée provoquée par une prise directe de cette spire 9 avec le premier doigt d'accroche 7, il peut être prévu un moyen de protection. A titre d'exemple, une pièce en matière plastique peut être disposée sur la spire 9 concernée ou sur le doigt d'accroche 7.

Le fait d'utiliser un nombre restreint de spires du ressort engendre un effort de traction du ressort plus important que si toute l'intégralité de la spire hélicoïdale était utilisée. Au-delà, selon un mouvement d'ouverture de l'ouvrant, le premier doigt d'accroche 7 est libéré du ressort 6, ce dernier exerçant alors uniquement un effort de traction donné par l'intégralité de la spire hélicoïdale 8.

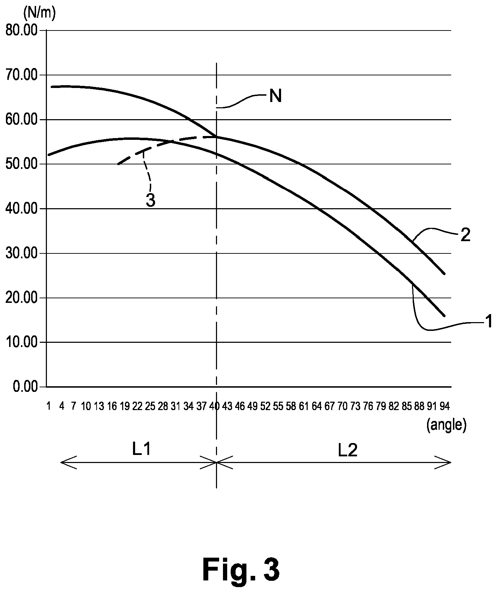

La figure 2 représente l'ouvrant 2 en configuration de fermeture, les points d'attache du ressort 6 étant le point fixe 12 sur caisse et le point mobile 17. Comme cela est rendu visible sur la figure 3, le couple de basculement de l'ouvrant est assujetti à l'effort de traction du ressort 6 et suit deux lois d'efforts L1 et L2 successives.

La première loi d'efforts L1 est définit par le ressort 6 mis sous tension par le point fixe 12 et le point mobile 17. La première loi d'efforts L1 donnée par le ressort 6 permet de générer un couple de basculement dont la valeur est maintenue supérieure au moment d'inertie du l'ouvrant seul, représenté par la courbe 1. Le couple de basculement étant supérieur au moment d'inertie de l'ouvrant seul, le déverrouillage de l'ouvrant à la structure de caisse engendre un basculement de l'ouvrant depuis sa position de fermeture vers sa position angulaire de point neutre N.

Le point neutre N définit le point à partir duquel l'intégralité de la spire hélicoïdale 8 fournit un effort de traction à l'ouvrant 2. Le point neutre N sur la figure 3 est représenté à approximativement 40° d'ouverture de l'ouvrant.

L'angle d'ouverture de l'ouvrant pourrait être différent pour la détermination du point neutre N lequel est assujetti au ressort même, mais aussi à la conception de l'ouvrant et la géométrie de la structure de caisse sur laquelle l'ouvrant est monté à articulation. Dès lors, l'ouvrant 2 suit une seconde loi d'efforts L2 pour son ouverture, le couple de basculement restant supérieur au moment d'inertie de l'ouvrant. Pendant la second loi d'efforts L2, le premier doigt d'accroche 9 est désolidarisé du ressort 6. Le couple de basculement est assujetti à l'effort de traction transmis par le ressort 6 alors mis sous tension par ses crochets 10 et 11 de fixation. Le ressort 6 est calibré par son épaisseur ainsi que par la nature du matériau utilisée à la fabrication de l'ouvrant 2 de telle sorte que le couple de basculement, tel qu'il est représenté par la courbe 2, est maintenu à iso écart du moment d'inertie de l'ouvrant rendant apte l'ouverture à vitesse de déplacement quasi constante.

En l'absence du dispositif de basculement de l'invention, l'utilisation du seul deuxième doigt d'accroche 15 pour mettre sous tension mécanique le ressort 6 serait inférieure au moment d'inertie de l'ouvrant pris isolément. C'est la raison pour laquelle la courbe 3 est située au-dessous du moment d'inertie de l'ouvrant seul (courbe 1).

Comparativement à une solution connue, le dispositif de basculement utilise les forces mécaniques pour améliorer le basculement de l'ouvrant 2. Par une mise sous tension mécanique du ressort 6 successivement par le premier doigt d'accroche 7, puis le second doigt d'accroche 15 lors de la phase d'ouverture se traduit par des première et seconde lois d'efforts L 1 et L2, avec une première loi d'efforts qui tend à augmenter d'approximativement 20 N l'effort appliqué par le ressort 6 à l'ouvrant 2 durant la première phase d'ouverture.

Compte tenu du fait que le dispositif de basculement 1 reste sur une utilisation de moyens purement mécanique pour automatiser l'ouverture de l'ouvrant, l'utilisateur devra fermer manuellement l'ouvrant en donnant une force légèrement supérieure, approximativement de 20N supérieur entre la position intermédiaire prédéfinie d'ouverture et la fermeture totale de l'ouvrant, ce qui reste très en deçà de toute limite rendant la fermeture difficile pour l'utilisateur du véhicule.

Le dispositif de basculement 1 de l'invention est remarquable en ce qu'il permet de réaliser à moindre cout une prestation améliorée au véhicule équipé d'un tel dispositif. Il permet par l'ajout d'un doigt d'accroche additionnel destiné à venir en prise avec l'une des spires du ressort, de modifier la loi d'ouverture de l'ouvrant. Une simple action sur une télécommande de déverrouillage de l'ouvrant à la caisse, l'ouvrant pouvant être un hayon de coffre ou un couvercle de malle arrière, engendre une ouverture automatique de l'ouvrant.

Par une conception appropriée du ressort 6, l'effort apporté par le dispositif de basculement 1 à l'ouvrant 2 est tout au plus supérieur de 20 à 30 N par rapport au moment d'inertie de l'ouvrant. La vitesse de déplacement de l'ouvrant est sensiblement constante du fait que l'écart entre le moment d'inertie de l'ouvrant et l'effort appliqué par le ressort à l'ouvrant est à écart approximativement constant sur toute la plage d'ouverture de l'ouvrant.

## Revendications

1. Dispositif (1) de basculement d'un ouvrant (2) sur une structure (3) de caisse d'un véhicule délimitant une voie d'accès à un compartiment, notamment un compartiment à bagages, le dispositif de basculement comprenant un moyen d'articulation (4) sur lequel l'ouvrant est monté mobile entre des positions d'obturation et d'ouverture maximale de la voie d'accès au compartiment par un bras de liaison (16) sensiblement de profil en col de cygne, l'une des extrémités du bras coopère avec ledit moyen d'articulation (4), le dispositif comprenant un moyen d'assistance (5) à l'ouverture comportant au moins des première et seconde lois d'effort (L1, L2) appliquées de manière successive à l'ouvrant selon sa position angulaire d'ouverture par rapport à la structure (3) de caisse, la première loi d'effort (L1) est appliquée à l'ouvrant sur une première plage angulaire d'ouverture entre la position de fermeture et une position intermédiaire prédéfinie d'ouverture, la deuxième loi d'effort (L2) étant appliquée à l'ouvrant sur une seconde plage angulaire d'ouverture entre sa position intermédiaire prédéfinie d'ouverture et sa position d'ouverture maximale, les première et seconde lois d'effort (L1, L2) sont réalisées selon des configurations différentes d'un ressort (6) de traction, **caractérisé en ce que** la première loi d'effort (L1) consiste en un travail en traction du ressort sur un nombre réduit de ses spires, l'ouvrant (2) comportant un premier doigt d'accroche (7) qui s'étend en saillie hors d'un bord latéral extérieur du bras (16) et qui est destiné à venir en prise avec l'une des spires du ressort (6) de sorte qu'entre la position de fermeture et la position intermédiaire prédéfinie d'ouverture de l'ouvrant, l'effort de traction du ressort est augmenté.

2. Dispositif (1) de basculement selon la revendication 1, **caractérisé en ce que** le ressort (6) comprend un corps déformable en spires hélicoïdales (8) dont l'une des spires est destinée à venir en prise avec le premier doigt d'accroche (7) lorsque l'ouvrant (2) est entre ses positions de fermeture et d'ouverture intermédiaire prédéfinie, la spire (9) destinée à venir en appui contre le premier doigt d'accroche (7) afin de transmettre la première loi d'effort (L1) à l'ouvrant (2) est approximativement située à une distance de l'extrémité du corps déformable comprise entre un tiers et un quart de sa longueur totale.

3. Dispositif (1) de basculement selon la revendication 1 ou 2, **caractérisé en ce que** le ressort (6) comprend à chacune de ces extrémités, un crochet (10, 11) de fixation, l'un étant lié à un point fixe (12) sur caisse, l'autre à un point mobile (13) lié à l'ouvrant articulé, la seconde loi d'effort (L2) consistant en un travail en traction du ressort utilisant la totalité des spires du ressort entre la position intermédiaire prédéfinie d'ouverture et la position d'ouverture maximale de l'ouvrant.

4. Dispositif (1) de basculement selon la revendication précédente, **caractérisé en ce que** le ressort (6) de traction est lié par l'un des crochets (11) de fixation à un dispositif de réglage (14) de la tension du ressort qui est disposé sur la structure (3) de caisse de sorte à former un point fixe (12) parmi plusieurs, l'autre des crochets (10) de fixation est monté sur un second doigt d'accroche (15) courbé afin de maintenir continuellement la liaison entre le ressort et l'ouvrant quelle que soit la position angulaire de l'ouvrant entre ses positions de fermeture et d'ouverture totale, le second doigt d'accroche (15) étant rapporté sur un bras de liaison (16) liant l'ouvrant audit moyen d'articulation.

5. Véhicule notamment du type d'une automobile comportant une structure (3) de caisse délimitant une ouverture d'accès à un compartiment, par exemple un compartiment à bagages, **caractérisé en ce qu'**il comprend un dispositif (1) de basculement selon l'une quelconque des revendications 1 à 4.

6. Procédé d'ouverture d'un ouvrant (2) relié à une structure de caisse d'un véhicule par l'intermédiaire d'un dispositif (1) de basculement selon l'une quelconque des revendications 1 à 4, l'ouvrant étant en position de fermeture, le premier doigt d'accroche (7) étant en prise avec une spire (9) du ressort (6), un moyen de verrouillage maintient l'ouvrant en position de fermeture sur la structure (3) de caisse, le procédé comporte les étapes suivantes :
- le moyen de verrouillage est basculé en l'état inactif de maintien de l'ouvrant en position de fermeture,
- l'ouvrant est sous la dépendance de la première loi d'effort (L1) de sorte que l'ouvrant bascule de sa position de fermeture vers sa position intermédiaire prédéfinie d'ouverture, le premier doigt d'accroche (7) reste en prise avec la spire (9) du ressort, puis
- le premier doigt d'accroche (7) se libère de la spire (9) du ressort de telle sorte que l'ouvrant (2) est alors sous la dépendance de la seconde loi d'effort (L2), l'ouvrant basculant jusqu'à sa position d'ouverture totale.

7. Procédé selon la revendication 6, **caractérisé en ce que** l'ouvrant (2) assujetti aux première et seconde lois d'efforts (L1, L2) est sous la dépendance d'un couple de basculement supérieur au moment d'inertie de l'ouvrant, rendant apte l'ouverture automatique de l'ouvrant.

## Patentansprüche

1. Vorrichtung (1) zum Kippen eines Flügels (2) an einer Karosseriestruktur (3) eines Fahrzeugs, die einen Zugangsweg zu einem Raum, insbesondere einem Gepäckraum, begrenzt, wobei die Kippvorrichtung ein Gelenkmittel (4) umfasst, an dem der Flügel über einen Verbindungsarm (16) mit im Wesentlichen einem Schwanenhalsprofil zwischen einer Schließposition und einer maximalen Öffnungsposition des Zugangswegs zu dem Raum beweglich montiert ist, wobei eines der Enden des Arms mit dem Gelenkmittel (4) zusammenwirkt, wobei die Vorrichtung ein Öffnungsunterstützungsmittel (5) umfasst, das mindestens ein erstes und ein zweites Kraftgesetz (L1, L2) aufweist, die auf den Flügel gemäß seiner Öffnungswinkelposition bezüglich der Karosseriestruktur (3) aufeinanderfolgend ausgeübt werden, wobei das erste Kraftgesetz (L1) auf den Flügel über einen ersten Öffnungswinkelbereich zwischen der Schließposition und einer vordefinierten Zwischenöffnungsposition ausgeübt wird, wobei das zweite Kraftgesetz (L2) auf den Flügel über einen zweiten Öffnungswinkelbereich zwischen seiner vordefinierten Zwischenöffnungsposition und seiner maximalen Öffnungsposition ausgeübt wird, wobei das erste und das zweite Kraftgesetz (L1, L2) gemäß unterschiedlichen Konfigurationen einer Zugfeder (6) realisiert werden, **dadurch gekennzeichnet, dass** das erste Kraftgesetz (L1) aus Arbeit der Feder auf Zug über eine reduzierte Zahl ihrer Windungen besteht, wobei der Flügel (2) einen ersten Einhakfinger (7) aufweist, der sich von einem seitlichen Außenrand des Arms (16) vorragend erstreckt und der dazu bestimmt ist, mit der einen der Windungen der Feder (6) in Eingriff zu kommen, so dass die Zugkraft der Feder zwischen der Schließposition und der vordefinierten Zwischenöffnungsposition des Flügels vergrößert ist.

2. Kippvorrichtung (1) nach Anspruch 1, **dadurch gekennzeichnet, dass** die Feder (6) einen deformierbaren Körper aus spiralförmigen Windungen (8) umfasst, wobei eine der Windungen dazu bestimmt ist, mit dem ersten Einhakfinger (7) in Eingriff zu gelangen, wenn der Flügel (2) zwischen seiner Schließposition und seiner vordefinierten Zwischenöffnungsposition ist, wobei sich die Windung (9), die dazu bestimmt ist, an dem ersten Einhakfinger (7) in Anlage zu kommen, um das erste Kraftgesetz (L1) an den Flügel (2) zu übertragen, ungefähr in einem Abstand von dem Ende des deformierbaren Körpers befindet, der zwischen einem Drittel und einem Viertel seiner Gesamtlänge liegt.

3. Kippvorrichtung (1) nach Anspruch 1 oder 2, **dadurch gekennzeichnet, dass** die Feder (6) an jedem dieser Enden einen Fixierungshaken (10, 11) umfasst, wobei der eine mit einem Festpunkt (12) an der Karosserie verbunden ist und der andere mit einem beweglichen Punkt (13), der mit dem angelenkten Flügel verbunden ist, wobei das zweite Kraftgesetz (L2) aus einer Arbeit auf Zug der Feder zwischen der vordefinierten Zwischenöffnungsposition und der maximalen Öffnungsposition des Flügels besteht, wobei die Gesamtheit der Windungen der Feder zum Einsatz kommt.

4. Kippvorrichtung (1) nach dem vorhergehenden Anspruch, **dadurch gekennzeichnet, dass** die Zugfeder (6) über einen der Fixierungshaken (11) mit einer an der Karosseriestruktur (3) angeordneten Vorrichtung (14) zur Regulierung der Spannung der Feder verbunden ist, so dass ein Festpunkt (12) unter mehreren gebildet wird, und der andere der Fixierungshaken (10) an einem zweiten gekrümmten Einhakfinger (15) montiert ist, um die Verbindung zwischen der Feder und dem Flügel unabhängig von der Winkelposition des Flügels zwischen seiner Schließposition und seiner maximalen Öffnungsposition kontinuierlich aufrechtzuerhalten, wobei der zweite Einhakfinger (15) an einem Verbindungsarm (16) angebracht ist, der den Flügel mit dem Gelenkmittel verbindet.

5. Fahrzeug, insbesondere der Art eines Kraftfahrzeugs, aufweisend eine Karosseriestruktur (3), die einen Flügel zum Zugang zu einem Raum, beispielsweise einem Gepäckraum, begrenzt, **dadurch gekennzeichnet, dass** es eine Kippvorrichtung (1) nach einem der Ansprüche 1 bis 4 umfasst.

6. Verfahren zum Öffnen eines Flügels (2), der mittels einer Kippvorrichtung (1) nach einem der Ansprüche 1 bis 4 mit einer Karosseriestruktur eines Fahrzeugs verbunden ist, wobei der Flügel in der Schließposition ist, der erste Einhakfinger (7) mit einer Windung (9) der Feder (6) ein Eingriff steht und ein Verriegelungsmittel den Flügel in der Schließposition an der Karosseriestruktur (3) hält, wobei das Verfahren die folgenden Schritte aufweist:
- das Verriegelungsmittel wird in den inaktiven Zustand zum Halten des Flügels in der Schließposition gekippt,
- der Flügel unterliegt dem ersten Kraftgesetz (L1), so dass der Flügel aus seiner Schließposition zu einer vordefinierten Zwischenöffnungsposition hin kippt und der erste Einhakfinger (7) mit der Windung (9) der Feder in Eingriff bleibt, wonach
- der erste Einhakfinger (7) aus der Windung (9) der Feder aushakt, so dass der Flügel (2) sodann dem zweiten Kraftgesetz (L2) unterliegt, wobei der Flügel bis zur maximalen Öffnungsposition kippt.

7. Verfahren nach Anspruch 6, **dadurch gekennzeichnet, dass** der dem ersten und dem zweiten Kraftgesetz (L1, L2) unterliegende Flügel (2) einem Kippmoment unterliegt, das größer als das Trägheitsmoment des Flügels ist, was das automatische Öffnen des Flügels ermöglicht.

## Claims

1. Device (1) for tilting an opening leaf (2) on a body structure (3) of a vehicle defining an access route for accessing a compartment, particularly a luggage compartment, the tilting device comprising hinge means (4) on which the opening leaf is mounted with the ability to move between positions in which the route for accessing the compartment is closed and fully open, by means of a connecting arm (16), of substantially gooseneck profile, one of the ends of the arm collaborating with said hinge means (4), the device comprising opening assistance means (5) including at least first and second force laws (L1, L2) applied consecutively to the opening leaf depending on its angular opening position relative to the body structure (3), the first force law (L1) being applied to the opening leaf over a first angular opening range between the closed position and a predetermined intermediate open position, the second force law (L2) being applied to the opening leaf over a second angular opening range between its predetermined intermediate open position and its fully open position, the first and second force laws (L1, L2) being produced according to different configurations of a tension spring (6), **characterized in that** the first force law (L1) consists of work in tension of the spring on a small number of its coils, the opening leaf (2) including a first hooking finger (7) which projects from an outer lateral edge of the arm (16) and which is intended to engage with one of the coils of the spring (6) so that the tensile force of the spring is increased between the closed position and the predetermined intermediate open position of the opening leaf.

2. Tilting device (1) according to Claim 1, **characterized in that** the spring (6) comprises a deformable body of helical coils (8), one of the coils of which is intended to engage with the first hooking finger (7) when the opening leaf (2) is between its closed and predetermined intermediate open positions, the coil (9) intended to press against the first hooking finger (7) in order to transmit the first force law (L1) to the opening leaf (2) being approximately situated at a distance from the end of the deformable body of between one third and one quarter of its total length.

3. Tilting device (1) according to Claim 1 or 2, **characterized in that** the spring (6) comprises a fastening hook (10, 11) at each of its ends, one hook being connected to a fixed point (12) on the body, and the other to a movable point (13) connected to the hinged opening leaf, the second force law (L2) consisting of work in tension of the spring using all of the coils of the spring between the predetermined intermediate open position and the fully open position of the opening leaf.

4. Tilting device (1) according to the preceding claim, **characterized in that** the tension spring (6) is connected by one of the fastening hooks (11) to a device (14) for adjusting the tension of the spring that is arranged on the body structure (3) so that it forms one of several fixed points (12), the other of the fastening hooks (10) is mounted on a curved second hooking finger (15) in order to continuously maintain the connection between the spring and the opening leaf regardless of the angular position of the opening leaf between its closed and fully open positions, the second hooking finger (15) being attached to a connecting arm (16) connecting the opening leaf to said hinge means.

5. Vehicle, particularly such as a car, including a body structure (3) defining an opening giving access to a compartment, for example a luggage compartment, **characterized in that** it comprises a tilting device (1) according to any one of Claims 1 to 4.

6. Method for opening an opening leaf (2) connected to a body structure of a vehicle by means of a tilting device (1) according to any one of Claims 1 to 4, the opening leaf being in a closed position, the first hooking finger (7) being engaged with a coil (9) of the spring (6), locking means holding the opening leaf in the closed position on the body structure (3), the method including the following steps:
- the locking means are switched to the state in which the holding of the opening leaf in the closed position is inactive,
- the opening leaf is subject to the first force law (L1) so that the opening leaf tilts from its closed position to its predetermined intermediate open position, the first hooking finger (7) remaining engaged with the coil (9) of the spring, then
- the first hooking finger (7) is released from the coil (9) of the spring so that the opening leaf (2) is then subject to the second force law (L2), and the opening leaf tilts to its fully open position.

7. Method according to Claim 6, **characterized in that** the opening leaf (2) governed by the first and second force laws (L1, L2) is subject to a tilting torque greater than the moment of inertia of the opening leaf, making the automatic opening of the opening leaf possible.
